# EUROPÄISCHE PATENTANMELDUNG

(11) **EP 1 182 621 A2**
(43) Veröffentlichungstag der Anmeldung: **27.02.2002**
(21) Anmeldenummer: 01000402.6
(22) Anmeldetag: 23.08.2001
(51) Int. Cl.: G07C 9/00

(54) **Zugangssystem mit Anlernmöglichkeit fremder Zugangsschlüssel**

(30) Priorität: 09.01.2001 DE 10100576; 24.08.2000 DE 10041557
(71) Anmelder: Philips Corporate Intellectual Property GmbH, 52064 Aachen (DE); Koninklijke Philips Electronics N.V., 5621 BA Eindhoven (NL)
(72) Erfinder: Nowottnick, Jürgen, 52064, Aachen (DE); Scholze, Steffen, 52064, Aachen (DE)
(74) Vertreter: Volmer, Georg, Dipl.-Ing.

(57) **Zusammenfassung**

Es isf ein Zugangssystem mit originären, autorisierten Zugangsschlüsseln (2) vorgesehen, wobei in dem Zugangssystem und den originären Zugangsschlüsseln (2) jeweils ein identischer, geheimer kryptographischer Schlüssel, jeweils ein identischer kryptographischer Algorithmus und identische Pseudo-Zufalls-Generatoren vorgesehen sind, welche in einem Challenge-Response-Verfahren zur gegenseitigen Authentisierung einsetzbar sind. Zum Anlernen eines oder mehrerer zusätzlicher, nicht originärer Zugangsschlüssel (4), die einem Pseudo-Zufalls-Generator gleicher Bauart Ihres Zugangssystems aufweisen, ist vorgesehen, dass
- mit einem originären Zugangsschlüssel (2) eine Authentisierung beim Zugangssystem (1) vorgenommen wird,
- das Zugangssystem (1) und ein anzulernender, zusätzlicher Zugangsschlüssel (4) jeweils in einen Anlernmodus versetzt werden,
- der anzulernende Zugangsschlüssel (4) seinen individuellen Bezeichner, der den Zugangsschlüssel (4) identifiziert, an das Zugangssystem (1) sendet,

## Beschreibung

Die Erfindung bezieht sich auf ein Zugangssystem mit originären, autorisierten Zugangsschlüsseln, welches es zusätzlich gestattet, neue, zusätzliche und nicht originäre Zugangs-schlüssel anzulernen, so dass diese nach dem Anlernen den Zugang zu dem Zugangssystem ebenso wie die originären autorisierten Zugangsschlüssel gestatten.

In derartigen Zugangssystemen ist sowohl in dem Zugangssystem selbst, das beispielsweise eine Sicherung zu einer Wohnung oder einem Fahrzeug darstellen kann, wie auch in den zu dem Zugangssystemen gehörigen Zugangsschlüsseln jeweils ein identischer kryptographischer Algorithmus sowie ein identischer, geheimer kryptographischer Schlüssel gespeichert. Zusätzlich weisen beide identische Pseudo-Zufallszahlen-Generatoren auf. Eine gegenseitige Authentisierung des Systems und der Zugangsschlüssel wird mittels eines an sich bekannten Challenge-Response-Verfahrens vorgenommen. Derartige Systeme sind dem Stand der Technik bekannt. So ist beispielsweise aus der US5 920 268 ein Zugangssystem bekannt, welches für Kraftfahrzeuge vorgesehen ist. Dieses Zugangssystem ist auch in ein Lernmodus versetzbar, in dem weitere Schlüssel angelernt werden können. Dies geschieht über einen Batteriewechsel. Weitere Details des Vorgangs des Anlernens nennt diese Veröffentlichung nicht.

Es ist Aufgabe der Erfindung, ein Zugangssystem der oben beschriebenen Art anzugeben, bei welchem auf möglichst sichere und zugleich einfache Weise zusätzliche neue Zugangsschlüssel angelernt werden können.

Diese Aufgabe ist erfindungsgemäß gelöst durch folgende Merkmale des Patentanspruches 1:
Zugangssystem mit originären, autorisierten Zugangsschlüsseln, wobei in dem Zugangssystem und den originären Zugangsschlüsseln jeweils ein identischer, geheimer kryptographischer Schlüssel, jeweils ein identischer kryptographischer Algorithmus und identische Zahlenfolgen liefernde Pseudo-Zufallszahlen-Generatoren vorgesehen sind, welche in einem Challenge-Response-Verfahren zur gegenseitigen Authentisierung einsetzbar sind, wobei zum Anlernen eines oder mehrerer zusätzlicher, nicht originärer Zugangsschlüssel, die einen gleiche Zahlenfolgen liefernden Pseudo-Zufallszahlen-Generator aufweisen, vorgesehen ist, dass
   - mit einem originärem Zugangsschlüssel eine Authentisierung beim Zugangssystem vorgenommen wird,
   - das Zugangssystem und ein anzulernender, zusätzlicher Zugangsschlüssel jeweils in einen Anlernmodus versetzt werden,
   - der anzulernende Zugangsschlüssel seinen individuellen Bezeichner, der den Zugangsschlüssel identifiziert, an das Zugangssystem sendet,
   - das Zugangssystem den mittels einer von seinem Pseudo-Zufalls-Generator gelieferten Zahl verschleierten geheimen kryptographischen Schlüssel an den anzulernenden Zugangs-Schlüssel sendet, der diesen mitttels der gleichen, von seinem Pseudo-Zufallszahlen-Generator gelieferten Zahl entschleiert und speichert,
   - und indem das Zugangssystem den Bezeichner des angelernten Zugangsschlüssels speichert und eine gegenseitige Authentisierung mit dem angelernten Zugangsschlüssel durchführt, der nachfolgend als Zugangsschlüssel einsetzbar ist.

Wie bereits oben erläutert, kann in dem Zugangssystem zwischen dem System selbst und den originären, autorisierten Zugangsschlüsseln mittels eines Challenge-Response-Verfahrens eine gegenseitige Authentisierung vorgenommen werden. Derartige Authentisierungen nach diesem Verfahren sind nach dem Stande der Technik allgemein bekannt.

Für das erfindungsgemäße Anlernen eines oder mehrerer zusätzlicher, nicht originärer Zugangsschlüssel ist eine zuvor vorgenommene gegenseitige Authentisierung Voraus-Setzung. Damit wird erreicht, dass eine nachfolgende Authentisierung zusätzlicher Schlüssel nur in einer solchen quasi-gesicherten Umgebung vorgenommen werden kann.

Nach einer solchen Authentisierung werden das Zugangssystem und ein ggf. anzulernender, zusätzlicher Zugangsschlüssel jeweils in einen Anlernmodus versetzt. Dies kann beispielsweise auch in einer Abfolge nacheinander geschehen.

Anstelle des originären Zugangsschlüssels wird dann ein anzulernender Zugangsschlüssel eingesetzt, der seinen individuellen Bezeichner (Identifier), der ihn individuell identifiziert, an das Zugangssystem sendet.

Das Zugangssystem sendet daraufhin den mittels einer Zufallszahl aus dem Pseudo-Zufalls-Generators verschleierten geheimen kryptographischen Schlüssel an den anzulernenden Zugangsschlüssel. Da dieser einen gleichartigen Pseudo-Zufalls-Generator aufweist, ist der anzulernende Zugangsschlüssel in der Lage, die Verschleierung rückgängig zu machen und so den unverschleierten kryptographischen Schlüssel zu gewinnen. Dieser wird in dem anzulernenden Zugangsschlüssel gespeichert.

Anschließend wird zwischen dem Zugangssystem und dem angelernten Schlüssel eine gegenseitige Authentisierung vorgenommen. Ferner speichert das Zugangssystem den Bezeichner des angelernten Zugangsschlüssels.

Nach diesem Vorgang ist der angelernte Zugangsschlüssel mit seinem Identifier in dem Zugangssystem als berechtigter Zugangsschlüssel gespeichert und ist somit in der Lage, zukünftig Authentisierungen vorzunehmen, so dass er uneingeschränkt als Zugangsschlüssel verwendbar ist.

Das erfindungsgemäße Zugangssystem weist den Vorteil auf, dass der kryptographische Schlüssel nur in einer quasi-gesicherten Umgebung übertragen wird. Ferner wird dieser Schlüssel nur von dem Zugangssystem auf einen anzulernenden Schlüssel übertagen. Dies geschieht auch nur in verschleierter Form. Der Zugangsschlüssel kann niemals von einem angelernten Schlüssel an ein anderes Zugangssystem übertragen werden. Damit wird erreicht, dass dieser Schlüssel weiter geheim bleibt und nicht "abhörbar" ist.

Auf diese Weise erhält ein rechtmäßiger Benutzer des Zugangssystems, der einen originären Zugangsschlüssel besitzt, die Möglichkeit, flexibel anderen Zugangsschlüsseln bzw. Personen Zugang zu dem Zugangssystem zu gewähren und ggf. auch wieder zu entziehen, indem die Identifier angelernter Schlüssel in dem Zugangssystem wieder gelöscht werden.
Ein bestimmter Zugangsschlüssel und somit eine Person, der dieser Schlüssel gehört, kann für mehrere Zugangssysteme authentisiert werden, beispielsweise für mehrere Kraftfahrzeuge.

Obwohl dieses Zugangssystem den besonderen Sicherheitsanforderungen, beispielsweise bei Wohnungen oder Kraftfahrzeugen gerecht wird, ist der Aufwand und sind somit die Kosten für eine Authentisierung zusätzlicher Zugangsschlüssel gering.

Eine vorteilhafte Ausgestaltung der Erfindung gemäß Anspruch 2 vereinfacht es weiter, einen anzulernenden Zugangsschlüssel in den Anlernmodus zu versetzen, da das Zugangssystem, sobald es in den Anlernmodus versetzt wurde, seinerseits ein entsprechendes Kommando an den anzulernenden Zugangsschlüssel sendet, welches diesen ebenfalls in den Anlernmodus versetzt.

Eine weitere Ausgestaltung der Erfindung gemäß Anspruch 3 gestattet es, die Sicherheit des Systems dadurch weiter zu erhöhen, dass nur bestimmte originäre Zugangsschlüssel zum Anlernen neuer Zugangsschlüssel berechtigt sind Damit kann beispielsweise ein Zugangsschlüssel, der nicht zum Anlernen weiterer Schlüssel berechtigt ist, in dritte Hände gegeben werden, ohne dass die Gefahr des Anlernens weiterer Schlüssel durch diesen Dritten besteht.

Gemäß einer weiteren Ausgestaltung der Erfindung nach Anspruch 4 können zur Vereinfachung des Aufbaus sowohl des Zugangssystems als auch der Zugangsschlüssel, die in diesen vorgesehenen kryptographischen Algorithmen zur Realisierung der Pseudo-Zufalls-Generatoren eingesetzt werden. In diesem Falle werden den kryptographischen Algorithmen bestimmte Startwerte angegeben, woraufhin diese eine Pseudo-Zufalls-Zahlenfolge liefern.

Eine weitere Ausgestaltung der Erfindung gemäß Anspruch 5 gestattet es, neu angelernten Schlüsseln durch Löschen von deren Bezeichnern in dem Zugangssystem jederzeit die Zugangsberechtigung zu entziehen. Somit kann sichergestellt werden, dass unzulässig oder unwissentlich angelernte Zugangsschlüssel deren Berechtigung wieder entzogen werden kann.

Das Zugangssystem ist insbesondere für Kraftfahrzeuge vorteilhaft einsetzbar, da es trotz der Sicherheit, die es bietet, die Möglichkeit offeriert, zusätzliche Zugangsschlüssel weiterer Personen anzulernen.

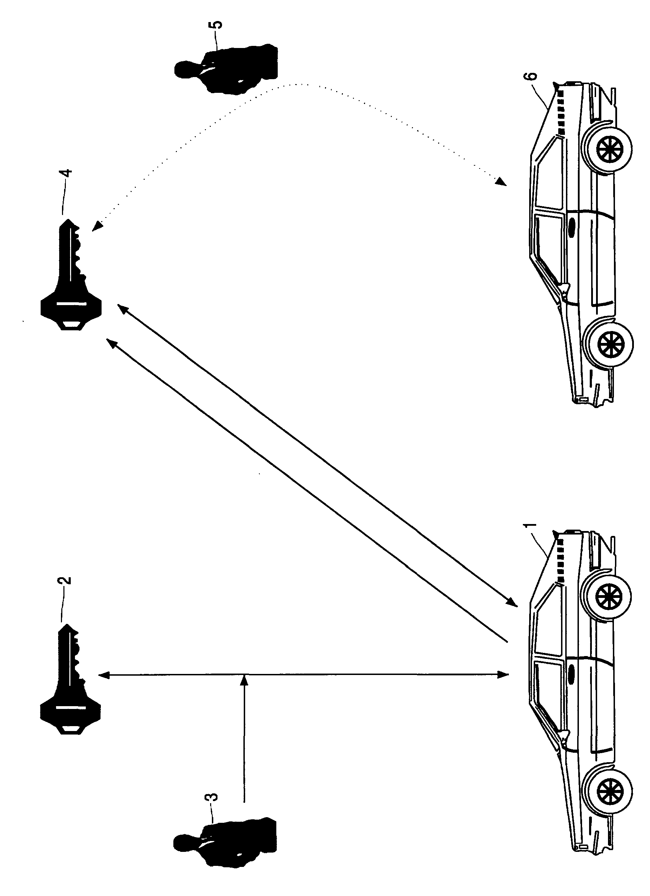

Nachfolgend wird ein Ausführungsbeispiel der Erfindung anhand der Zeichnung näher erläutert.

Die einzige Figur der Zeichnung zeigt in schematischer Darstellung ein Fahrzeug (1), welches in der Figur nicht dargestellter Weise mit einem erfindungsgemäßen Zugangssystem ausgestattet ist. Zu diesem Zugangssystem gehören originäre, autorisierte Zugangsschlüssel, beispielsweise der in der Figur schematisch dargestellte originäre Zugangsschlüssel (2).

Ein erster Benutzer (3) ist in der Lage, mittels des originären autorisierten Zugangsschlüssels (2) Zugang zu dem in dem Kraftfahrzeug (1) eingebauten Zugangssystem zu erhalten und somit das Kraftfahrzeug zu nutzen.

Diesen Zugang erhält der Benutzer (3) des originären autorisierten Zugangsschlüssels (2) in dem Zugangssystem des Kraftfahrzeuges (1) indem der Zugangsschlüssel (2) authentisiert wird Dies geschieht in einem sogenannten Challenge-Response- Verfahren.

Voraussetzung hierfür ist, dass sowohl in dem originären Zugangsschlüssel (2) als auch in dem Zugangssystem im Kraftfahrzeug (1) jeweils ein identischer, geheimer kryptographischer Schlüssel abgespeichert ist. Ferner müssen beide mit einem identischen kryptographischen Algorithmus arbeiten. Außerdem weisen beide identische Pseudo-Zufallszahlen-Generatoren auf.

Die Authentisierung bei jedem Zugang zu dem Fahrzeug (1) wird mittels des Zugangsschlüssels (2) in einem Challenge-Response-Verfahren vorgenommen, das in folgender Weise arbeitet:
Zunächst sendet der Zugangsschlüssel (2) an das Zugangssystem in dem Kraftfahrzeug (1) seinem Bezeichner, der englisch meist als Identifier bezeichnet wird Dieser wird unverschlüsselt gesendet. Das Zugangssystem prüft daraufhin die Berechtigung dieses Schlüssels, prüft also, ob der Identifier dieses Schlüssels als berechtigter Zugangsschlüssel abgespeichert ist. Ist dies der Fall, sendet das Zugangssystem eine Zufallszahl, die es mittels des Pseudo-Zufallszahlen-Generators erzeugt hat, an den Zugangsschlüssel (2). Diese Zufallszahl wird sowohl in dem Zugangssystem als auch in dem Zugangsschlüssel (2) mittels des kryptographischen Algorithmus und des in beiden abgespeicherten kryptographischen Schlüssels verschlüsselt, so dass aus dieser Zahl eine neue Zahl generiert wird.

Der Zugangsschlüssel (2) sendet diese mittels des Algorithmus und des Schlüssels gewonnene Zahl an das Zugangssystem, das diese Zahl mit der von ihm generierten Zahl vergleicht. Da sowohl der kryptographische Algorithmus als auch der kryptographische Schlüssel identisch sein sollten, müßte diese Zahl gleich sein. Nur wenn diese beiden Zahlen übereinstimmen, gibt das Zugangssystem den Zugang an den Zugangsschlüssel (2) frei, authentisiert ihn also.

Gegebenenfalls kann zur zusätzlichen Sicherung noch vorgesehen sein, dass das Zugangssystem nach Übertragung der Zufallszahl an den Zugangsschlüssel (2) ein Teilergebnis in dem Berechnungsvorgang mittels des Algorithmus an den Zugangsschlüssel (2) sendet. In diesem Fall sendet der Zugangsschlüssel (2) das von ihm mittels des kryptographischen Algorithmus und des kryptographischen Schlüssels berechnete Endergebnis nur dann an das Zugangssystem zurück, wenn dieses Teilergebnis bei der Berechnung in dem Zugangsschlüssel ebenfalls auftritt. Damit kann eine zusätzliche Sicherung dahingehend erreicht werden, dass eine Übertragung der mittels des kryptographischen Algorithmus und des kryptographischen Schlüssels in dem Zugangsschlüssel verschlüsselten Zahl zu dem Zugangssystem nur dann stattfindet, wenn das Zugangssystem mit hoher Wahrscheinlichkeit dem Zugangsschlüssel zugeordnet ist. Somit kann ein Abhören der verschlüsselten Daten, die von dem Zugangsschlüssel (2) zu dem Zugangssystem in dem Fahrzeug (1) übertragen werden, im unberechtigten System verhindert werden.

Eine derartige Authentisierung eines originären, autorisierten Zugangsschlüssels (2) in einem Zugangssystem ist gemäß der Erfindung Voraussetzung für das Anlernen zusätzlicher, nicht originärer Zugangsschlüssel.

Die Figur zeigt schematisch einen solchen zusätzlichen, nicht originären Zugangsschlüssel (4), der für das in das Fahrzeug (1) eingebaute Zugangssystem autorisiert werden soll. Dazu muß, wie oben erläutert, zunächst der originäre Zündschlüssel (2) sich in dem Zugangssystem authentisieren. Ist dies geschehen, kann der Benutzer (3) das Zugangssystem in dem Fahrzeug (1) in einen Anlernmodus versetzen. Dies kann beispielsweise durch eine bestimmte Bedienfolge, wie Blinken- Kuppeln-Blinken, geschehen. Das in den Anlernmodus versetzte Zugangasystem in dem Fahrzeug (1) versetzt daraufhin mittels eines speziellen Kommandos den nicht originären anzulernenden Zündschlüssel (4) ebenfalls in den Anlernmodus.

Daraufhin sendet der anzulernende Zugangsschlüssel (4) seinen Bezeichner, der diesen Zugangsschlüssel eindeutig identifiziert, unverschleiert an das in dem Fahrzeug (1) eingebaute Zugangssystem.

In dieser nunmehr geschaffenen, quasi-gesicherten Umgebung, überträgt daraufhin das Zugangssystem den mittels seines Pseudo-Zufalls-Generators verschleierten, geheimen kryptographischen Schlüssel an den anzulernenden Zugangsschlüssel (4). Die Verschleierung kann dabei beispielsweise in der Art vorgenommen werden, dass der kryptographische Schlüssel und die Pseudo-Zufallszahl bitweise addiert werden.

Da in dem Zugangsschlüssel (4) ein identischer Pseudo-Zufallszahlen-Generator eingebaut ist, kann der Zugangsschlüssel (4) mittels der gleichen Pseudo-Zufallszahl den verschleierten, geheimen kryptographischen Schlüssel entschlüsseln und gewinnt so den unverschleierten kryptographischen Schlüssel, der in dem Zugangsschlüssel (4) abgespeichert wird.

Am Ende dieses Anlernvorganges speichert das in dem Fahrzeug (1) eingebaute Zugangssystem den Bezeichner des angelernten Zugangsschlüssels (4), so dass dieser zukünftig zu den Bezeichnern gehört, die zugelassenen Zugangsschlüsseln zugeordnet sind Es wird eine gegenseitige Authentisierung zwischen dem Zugangssystem und dem angelernten Zugangsschlüssel (4) durchgerührt, der nachfolgend als Zugangsschlüssel zu dem Zugangssystem einsetzbar ist.

Es ist auf diese Weise möglich, dass beispielsweise ein zweiter Benutzer (5), dem der angelernte Fahrzeugschlüssel (4) gehört, zu dem Zugangssystem des Fahrzeuges (1) Zugang erhält, obwohl der Zugangsschlüssel (4) eigentlich ein originärer, autorisierter Zugangsschlüssel zu einem weiteren Fahrzeug (6) ist. Im Ergebnis kann mit dem Zugangsschlüssel (4) sowohl ein Zugang zu dem Zugangssystem des Fahrzeuges (1) als auch dem des Fahrzeugs (6) erhalten werden.

Dennoch bietet das System eine hohe Sicherheit, da das Anlernen zusätzlicher Schlüssel nur mittels originärer Zugangsschlüssel vorgenommen werden kann. Der in dem System abgespeicherte kryptographische Schlüssel wird nur in verschleierter Form übertragen und ist beispielsweise aus dem angelernten Schlüssel (4) nicht auslesbar.

Zur zusätzlichen Sicherheit kann es vorgesehen sein, dass nur bestimmte, vorgsgebene originäre autorisierte Zugangsschlüssel zum Anlernen zusätzlicher Zugangsschlüssel berechtigt sind. Auch kann es vorgesehen sein, dass die in dem Zugangssystem abgespeicherten Identifier zusätzlich angelernter Zugangsschlüssel wieder löschbar sind, so dass also angelernten Zugangsschlüsseln die Zugangsberechtigung auch später wieder entzogen werden kann.

## Patentansprüche

1. Zugangssystem (1) mit originären, autorisierten Zugangsschlüsseln (2), wobei in dem Zugangssystem (1) und den originären Zugangsschlüsseln (2) jeweils ein identischer, geheimer kryptographischer Schlüssel, jeweils ein identischer kryptographischer Algorithmus und identische Zahlenfolgen liefernde Pseudo-Zufallszahlen-Generatoren vorgesehen sind, welche in einem Challenge-Response-Verfahren zur gegenseitigen Authentisierung einsetzbar sind, wobei zum Anlernen eines oder mehrerer zusätzlicher, nicht originärer Zugangsschlüssel (4), die einen gleiche Zahlenfolgen liefernden Pseudo-Zufallszahlen-Generator aufweisen, vorgesehen ist, dass
- mit einem originärem Zugangsschlüssel (2) eine Authentisierung beim Zugangssystem (1) vorgenommen wird,
- das Zugangssystem (1) und ein anzulernender, zusätzlicher Zugangsschlüssel (4) jeweils in einen Anlernmodus versetzt werden,
- der anzulernende Zugangsschlüssel (4) seinen individuellen Bezeichner, der den Zugangsschlüssel (4) identifiziert, an das Zugangssystem (1) sendet,
- das Zugangssystem (1) den mittels einer von seinem Pseudo-Zufalls-Generator gelieferten Zahl verschleierten geheimen kryptographischen Schlüssel an den anzulernenden Zugangsschlüssel sendet (4), der diesen mitttels der gleichen, von seinem Pseudo-Zufallszahlen-Generator gelieferten Zahl entschleiert und speichert,
- und indem das Zugangssystem (1) den Bezeichner des angelernten Zugangsschlüssels (4) speichert und eine gegenseitige Authentisierung mit dem angelernten Zugangsschlüssel (4) durchführt, der nachfolgend als Zugangsschlüssel einsetzbar ist.

2. Zugangssystem nach Anspruch 1,
**dadurch gekennzeichnet,**
**dass** das Zugangssystem (1), nachdem es selbst in den Anlernmodus versetzt wurde, seinerseits mittels eines Kommandos den anzulernenden Zugangsschlüssel (4) in den Anlernmodus versetzt.

3. Zugangssystem nach Anspruch 1, **dadurch gekennzeichnet, dass** in dem Zugangssystem (1) nur bestimmte, vorgegebene Zugangsschlüssel berechtigt sind, ein Anlernen zusätzlicher, nicht originärer Zugangsschlüssel (4) auszulösen.

4. Zugangssystem nach Anspruch 1,
**dadurch gekennzeichnet,**
**dass** die in dem Zugangssystem (1) und den Zugangsschlüsseln (2,4) vorgesehenen kryptographischen Algorithmen als Pseudo-Zufallszahlen-Generatoren eingesetzt werden.

5. Zugangssystem nach Anspruch 1,
**dadurch gekennzeichnet,**
**dass** neu angelernten Zugangsschlüsseln (4) in dem Zugangssystem (1) die Berechtigung entzogen werden kann, indem deren in dem Zugangssystem (1) gespeicherte Bezeichner gelöscht werden.

6. Zugangssystem nach Anspruch 1,
**dadurch gekennzeichnet,**
**dass** das Zugangssystem (1) mittels einer vorgegebenen Bedienfolge in den Anlernmodus versetzbar ist.

7. Anwendung des Zugangssystems nach einem der Ansprüche 1 bis 6 in einem Kraftfahrzeug
